# EUROPEAN PATENT SPECIFICATION

(11) **EP 1 896 511 B1**
(45) Date of publication and mention of the grant of the patent: **25.10.2017**
(21) Application number: 06769044.6
(22) Date of filing: 26.06.2006
(51) Int. Cl.: C08B 37/08

(54) **A METHOD FOR PREPARING LOW MOLECULAR WEIGHT POLYSACCHARIDE AND THE SALT THEREOF**
VERFAHREN FÜR DIE ZUBEREITUNG VON POLYSACCHARID MIT NIEDRIGEM MOLEKULARGEWICHT UND SALZ DARAUS
PROCEDE DESTINE A LA PREPARATION D'UN POLYSACCHARIDE DE FAIBLE POIDS MOLECULAIRE ET DE SON SEL

(30) Priority: 27.06.2005 KR 20050055478
(43) Date of publication of application: 12.03.2008
(73) Proprietor: SK bioland Co., Ltd., Chungnam, 31257 (KR)
(72) Inventor: KIM, Ki Soo, Cheongju-si, Chungcheongbuk-do 360-181 (KR); KIM, Jin Guk, Cheonan-si, Chungcheongnam-do 330-190 (KR); CHOI, Bong Rak 108-804, Cheongdang Maeul, Cheonan-si, Chungcheongnam-do 330-270 (KR); KIM, Young Heui, Cheonan-si, Chungcheongnam-do 330-260 (KR); KIM, Ki Ho, Cheonan-si, Chungcheongnam-do 330-866 (KR); YU, Heui Jong, Seongnam-si, Gyeonggi-do 463-003 (KR); CHO, Nam Suk, Yongin-si, Gyeonggi-do 449-130 (KR)
(74) Representative: Viering, Jentschura & Partner mbB Patent- und Rechtsanwälte
(86) International application number: PCT/KR2006/002467
(87) International publication number: WO 2007/001140

(56) References cited:
- EP-A1- 1 865 002
- EP-A1- 1 992 645
- JP-A- 11 124 401
- JP-A- 63 057 602
- JP-A- 2005 110 675
- KR-A- 20000 072 318

## Description

### Technical Field

The present invention relates to a method for effectively preparing low molecular weight hyaluronic acid and the salt thereof by hydrolyzing high molecular hyaluronic acid with ionic exchange resin under water solution or mixture solution thereof.

### Background Art

It has been known that hyaluronic acid is a water-soluble polysaccharide, a bio-macromolecule having long chain structure linked with β-D-glucuronic acid and β-D-N-acetylglucosamine which shows various physical characteristics such as high viscosity, hydroscopic activity, biocompatibility and one of main skin components together with collagen and elastine. The molecular weight of hyaluronic acid ranges from 0.1x10⁶ to 10x10⁶ dalton varied from the origin, preparing method and purification method of hyaluronic acid, and their viscosity, elasticity and hydroscopic activity in water solution depending on their molecular weight and concentration.

By dint of those properties, hyaluronic aid and the derivatives thereof have been extensively used in various fields: for examples, USP Nos. 4,141,973 and 4,517,295 disclose their use in optical surgery, horse knee treatment and as a cosmetic moisturizing agent; International Patent Publication No. PCT/WO 99/59603 discloses their use as a therapeutic agent for treating joint disease and so on.

However, there remains unsolved problem to use as a topical preparation since hyaluronic acid is a too large molecule to permeate skin barrier till now. In an alternative tool, low molecular weight hyaluronic acid and the salt thereof, especially, oligo-hyaluronic acid having low-molecular weight less than 10,000 dalton has been paid attention by dint of it's favorable advantages such as applicability with high concentration, non-stickiness.

There have been reported on the method for preparing low-molecular weight hyaluronic acid from high molecular weight hyaluronic acid: for example, the method using by heating method with high temperature and ultra-sonication method (Motohashi et al., Journal of Chromatography, 435 pp335-342, 1988; Bothner et al., Int. J. Biol. Macromol., p10, 1998); the method using by acid or base catalyst (Japanese Patent Publication Nos. JP S63-57602 and JP H01-266102); a method using by chlorine oxidizing agent such as hypochlorite (Japanese Patent Publication No. JP H02-245193); a method using by ammonium persulfurate (Korean Patent Registration No. 10-0369517) and method using by hyaluronidase enzymes (A. Sattor et al., J. Invest. Dermatol. 103, pp576-579, 1994; Japanese Patent Publication Nos. JP S62-79790 and JP H11-124401). However, there still remain lots of problems or disadvantages in the above-described literatures or patents as follows:

For example, the hydrolysis method under acid condition using inorganic acid or organic acid shows lots of disadvantages such as wide distribution ranges of various molecular weight of hydrolyzed products resulting from abundant production of too many monosaccharides; low transformation rate into lower molecular weight hyaluronic acid; necessity for further purification steps, i.e., desalting steps such as dialysis or ultra filtration caused by salt production associated from neutralization process; the formation of by-products resulting from the ring-cleavage of saccharide in case of hydrolysis method with strong inorganic acid, which could not afford complete production of oligo-hyaluronic acid (Y. Tokita and A. Okamoto, Polymer Degradation and Stability 48 pp269-273, 1995). In a while, the enzymatic hydrolysis method has some advantages such that it could obtain narrow distribution range of oligo-hyaluronic acid by selecting different hydrolysis condition such as enzyme activity and reaction period, however the method still remain several disadvantages such that it is not economic in mass production since the enzyme is too expensive and it is difficult to remove remained hydrolysis enzyme from the process, which requires further purification steps such as dialysis resulting in costly preparation method. Moreover, it has been reported that the low molecular weight hyaluronic acid obtained by enzymatic hydrolysis method has double-bonded terminal group differently from that of original structure of oligo-hyaluronic acid (J. A. Alkrad et al., J. Pharm. Biomed. Anal. 31, pp545-550, 2003).

EP 1992645 A1 and EP 1865002 A1 disclose the preparation of low molecular hyaluronic acid by an ion-exchange resin.

Accordingly, present inventors endeavored to develop effective and economic method for preparing low-molecular weight hyaluronic acid having various advantages over prior arts such as reduction of by-product, convenient reaction and manipulation, cheap priced product, finally found an effective and economic preparation method of the present invention to obtain low molecular-weight hyaluronic acid using by ion exchange resin as a hydrolysis catalyst having heterogeneous phase which has advantageous over prior arts, i.e., it could inhibit the transformation of hyaluronic acid due to its heterogeneous phase condition, easily remove and recover remaining catalyst with simple filtration and neutralization process and so on, and finally have accomplished present invention.

### Disclosure of Invention

### Technical Problem

Accordingly, it is an object of the present invention to provide a method for preparing low molecular weight hyaluronic acid from high molecular weight hyaluronic acid using by ion exchange resin.

### Technical Solution

In accordance with one aspect of the present invention, there is provided a method for preparing low molecular weight hyaluronic acid and the salt thereof from high molecular weight hyaluronic acid using by ion exchange resin according to annexed claim 1. The method comprises preparing a low molecular weight hyaluronic acid and the salt thereof from high molecular weight hyaluronic acid by hydrolyzing high molecular weight hyaluronic acid with ion exchange resin under water solution or mixture solution with organic solvent.
The term "low molecular weight hyaluronic acid and the salt thereof" disclosed herein comprises the compounds represented by following general chemical formula (I) and the salt thereof: 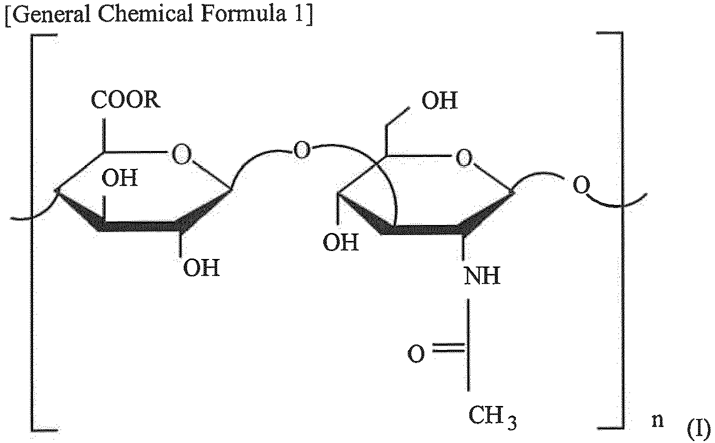
wherein n is an integer of 1 to 120,
R is a hydrogen atom or pharmaceutically acceptable salt.
In the above-described formula (I), preferably, n is an integer of 1 to 80, most preferably, an integer of 1 to 25 and R is pharmaceutically acceptable salt.
Preferably, the term "low molecular weight hyaluronic acid and the salt thereof" disclosed herein comprises the low molecular weight hyaluronic acid and the salt thereof having molecular weight ranging from 500 to 50,000 dalton, more preferably, 500 to 30,000 dalton, most preferably, 500 to 10,000.
Specifically, the pharmaceutically acceptable salt of the compounds represented by general formula (I) includes metal salt, acid salt, and base salt, preferably, the alkali metal or alkali-earth metal salt. As a free acid of above-described method, organic acid or inorganic acid can be used. For example, organic acid such as methansulfonic acid, *p*-toluensulfonic acid, acetic acid, trifluoroacetic acid, citric acid, maleic acid, succinic acid, oxalic acid, benzoic acid, lactic acid, glycolic acid, gluconic acid, galacturonic acid, glutamic acid, glutaric acid, glucuronic acid, aspartic acid, ascorbic acid, carbonylic acid, vanillic acid, hydroiodic acid, and inorganic acid such as hydrochloric acid, phosphoric acid, sulfuric acid, nitric acid, tartaric acid can be used herein, which can be formed by a pharmaceutically acceptable free acid thereof and can be prepared by the conventional method. For example, after dissolving the compound in the excess amount of acid solution, the salts are precipitated by the water-miscible organic solvent such as methanol, ethanol, acetone or acetonitrile to prepare acid addition salt thereof and further the mixture of equivalent amount of compound and diluted acid with water or alcohol such as glycol monomethylether, can be heated and subsequently dried by evaporation or filtrated under reduced pressure to obtain dried salt form thereof.

Further, the pharmaceutically acceptable alkali salt form of inventive compounds may be prepared by using base. The alkali metal or alkali-earth metal salt thereof can be prepared by the conventional method, for example, after dissolving the compound in the excess amount of alkali metal hydroxide or alkali-earth metal hydroxide solution, the insoluble salts are filtered and remaining filtrate is subjected to evaporation and drying to obtain the metal salt thereof. As a metal salt of the present invention, sodium, potassium or calcium salt are pharmaceutically suitable and the corresponding silver salt can be prepared by reacting alkali metal salt or alkali-earth metal salt with suitable silver salt such as silver nitrate.

The pharmaceutically acceptable salt of the compound represented by general formula (I) comprise all the acid or base salt which may be present at the compounds, if it does not indicated specifically herein. For example, the pharmaceutically acceptable salt of the present invention comprise the salt of metal group; i.e., alkali metal salt such as lithium, sodium, potassium salt thereof; alkali-earth metal salt such as magnesium, calcium salt thereof; the salt of organic amino group such as ammonia, ethylene diamine, cyclohexyl amine, aniline ethanolamine, diethanolamine, triethanolamine, ethylamine, propyl amine, aryl amine, diethylamine, butylamine, isobutylamine, triethylamine, petylamine, t-butylamine, isopropylamine salt thereof; the salt of hydroxyl group such as the sodium, calcium and potassium salt thereof, more preferably, the salt of hydroxyl group such as the sodium, calcium and potassium salt thereof or the physiologically acceptable salt of amine, which can be prepared by the conventional method well known in the art.

Above described low molecular weight hyaluronic acid of the present invention is prepared by the following procedures.

Distilled water or mixture solution with organic acid, preferably, mixed water solution with lower alcohol such as methanol, ethanol in an amount of ranging from 50 fold to 150 fold, preferably, 80 to 120 fold, more preferably, 90 to 110 fold weight based on the weight of high molecular weight hyaluronic acid sodium salt is added to high molecular weight hyaluronic acid to dissolve at 1^{st} step; appropriate amount of ion exchange resin ranging from 0.01 to 50%, preferably, 1 to 20% weight based on the weight of said high molecular weight hyaluronic acid salt is added to said solution and reacted with stirring at the temperature ranging from 20 to 130°C, preferably, 50 to 100°C, for the period ranging from 24 to 120 hours, preferably, 48 to 72 hours at 2^{nd} step; after stopping the reaction, said ion exchange resin is removed with filtration and remaining solution is neutralized with neutralizing agent to afford lyophilized low molecular weight hyaluronic acid of the present invention at 3^{rd} step.

In the above described method of the present invention,
At the 1^{st} step, it is preferable that the mixed water solution with lower alcohol is mixed with lower alcohol such as methanol, ethanol, butanol, glycerol, 1,3-butandiol, 1,2-propanediol, isopropanol, isobutanol, ethyleneglycol in a mixed ratio ranging from 1 to 50%, preferably, 1 to 5% in water.
At the 2^{nd} step, cationic exchange resin, anion exchange resin, or the combination thereof may be used as an exchange resin: specifically, as a cationic exchange resin, for example, strong acid cationic exchange resin such as gel type or porous type-styrene cationic exchange resin with sulfonyl group as an exchanging group and having crosslinking degree ranging from low to high crosslinking degree; strong acid cationic exchange resin with sulfonyl group and phenol group as exchanging groups; weak acid cationic exchange resin such as high porous type acrylic exchange resin with carboxylic group as an exchanging group; weak acid cationic exchange resin with amino acetic acid group as an exchanging group can be preferably used. As an anionic exchange resin, gel type and porous type strong base styrene anionic exchange resin with triethylammonium group and diethyl ethanol ammonium group as an exchanging group respectively; strong base styrene anionic exchange resin with benzyldimethyl 2-hydroxyethyl ammonium group as an exchanging group; weak base acrylic anionic exchange resin with trimethylammonium group as an exchanging group; weak base styrene anionic exchange resin with tertiary ammine group as an exchanging group; weak base styrene anionic exchange resin with trimethylammonium group as an exchanging group; and weak base styrene anionic exchange resin with benzyltrialkyl ammonium group as an exchanging group can be preferably used.

At the 3^{rd} step, as a neutralizing agent to neutralize the reaction solution cationic exchange resin, various agent such as sodium methoxide, sodium ethoxide, potassium tertiary butylate, sodium hydroxide, calcium carbonate, sodium carbonate, sodium bicarbonate, calcium hydroxide, potassium hydroxide, ethylene diamine, cyclohexylamine, aniline, ethanol amine, diethanol amine, triethanol amine, ethylamine, propylamine, arylamine, diethylamine, butyl amine, isobutyl amine, triethylamine, pentyl amine, t-butyl amine, isopropyl amine can be preferably used.

The method for preparing low molecular weight hyaluronic acid of the present invention can solve the problems occurring in the prior methods using chemical hydrolysis with acid and enzymatic hydrolysis with enzyme which has lots of disadvantages such as the formation of by-product, high cost, difficulty in mass production and has various advantages over prior arts such as easy to mass production, more economic production, uniform production of purposed low molecular weight hyaluronic acid and the salt thereof having mean molecular weight ranging from 500 to 50,000 dalton. Furthermore, it has been confirmed that the method of the present invention can prevent the ring cleavage of monosacchride in hyaluronic acid occurring in chemical hydrolysis and undesired formation of by-product having double bonded sugar ring occurring in enzymatic hydrolysis.

### Advantageous Effects

Therefore, the inventive method of the present invention could provide effective and economic method for preparing low-molecular weight hyaluronic acid with mass production and low cost.

The low molecular weight hyaluronic acid and the salt thereof which has uniform mean molecular weight ranging from 500 to 50,000 dalton and can be prepared by inventive method of the present invention may extensively used as medicine, cosmetic, medical material, food additives.

### Brief Description of the Drawings

Fig.1. presents a GPC analysis of oligo-hyaluronic acid prepared in Example 1;
Fig.2. depicts a ¹³C-NMR spectrum of oligo-hyaluronic acid prepared in Example 1.

### Mode for the Invention

The present invention is more specifically explained by the following figures and examples. However, it should be understood that the present invention is not limited to these examples in any manner.

### Example 1: Preparation of low molecular hyaluronic acid from high molecular weight hyaluronic acid (1)

### 1-1. Preparation of sodium salt of oligo-hyaluronic acid (1)

10 g of high molecular weight sodium salt of hyaluronic acid (Bioland Co. Ltd, Korea) was added to 1,000 g of distilled water to dissolve it. 80 g of strong acid cationic exchange resin (Amberite IR 120, Aldrich Co. Ltd) was added thereto and reacted with stirring at 80-90 °C for 48 hours. After stopping the reaction, remaining exchange resin was removed with filtration and the solution was neutralized with 1 N sodium bicarbonate. The neutralized solution was lyophilized to afford purposed low molecular weight hyaluronic acid (*See* Table 1).

### 1-2. Preparation of sodium salt of oligo-hyaluronic acid (2)-(22)

To obtain various sodium salt of oligo-hyaluronic acid (2)-(22), all the hydrolysis methods were identical with that disclosed in Example 1-1 except adopting different condition varying with the added amount and the sort of ion exchange resin, reaction time, and the sort of solvent. The result was shown in following Table 1.

**[Table 1]**

| No. | Ion exchange Resin | | | Reaction Time (hr) | Solvent | Weight of final product (g) |
|---|---|---|---|---|---|---|
| | Type | Resin | amount (g) | | | |
| (1) | Strong acid cationic | Amberlite IR120 | 80 | 48 | water | 9.2 |
| (2) | | | 160 | 48 | water | 9.1 |
| (3) | Weak acid cationic | Amberlite IRP64 | 100 | 48 | water | 9.5 |
| (4) | | | 200 | 48 | water | 9.0 |
| (5) | Strong acid cationic | Amberlite IR120 | 80 | 72 | water | 8.8 |
| (6) | | | 160 | 72 | water | 8.9 |
| (7) | Weak acid cationic | Amberlite IRP64 | 100 | 72 | water | 9.2 |
| (8) | | | 200 | 72 | water | 9.2 |
| (9) | Strong base anionic | Amberlite IRA400 | 120 | 48 | water | 9.1 |
| (10) | | | 200 | 48 | water | 8.8 |
| (11) | Weak base anionic | Amberlite IRA67 | 120 | 48 | water | 9.3 |
| (12) | | | 200 | 48 | water | 9.0 |
| (13) | Strong base anionic | Amberlite IRA400 | 120 | 72 | water | 8.7 |
| (14) | | | 200 | 72 | water | 9.4 |
| (15) | Weak base anionic | Amberlite IRA67 | 120 | 72 | water | 9.1 |
| (16) | | | 200 | 72 | water | 9.3 |
| (17) | Strong acid cationic | Amberlite IR120 | 160 | 96 | water | 9.0 |
| (18) | | | 160 | 120 | water | 8.8 |
| (19) | | | 160 | 72 | 5% EtOH | 8.5 |
| (20) | | | 160 | 72 | 5% EtOH | 8.3 |
| (21) | | | 160 | 72 | 20% EtOH | 7.4 |
| (22) | | | 160 | 72 | 40% EtOH | 7.2 |

### Experimental Example 1: Determination of absolute molecular weight of low molecular hyaluronic acid by GPC

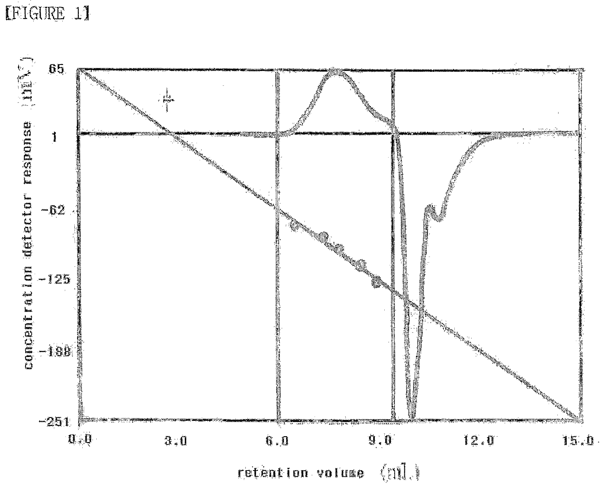

The mean molecular weight of various sodium salt of oligo-hyaluronic acids (1)-(22) prepared in Example 1 was determined by GPC under the condition that used column was Ultrahydrogel TM 120.250 model (size: 7.8x300 mm, Waters Co. Ltd) eluted with 0.1M sodium nitrate solution at the speed of 0.8 ml/min and the result was shown in Table 2 and Fig. 1.

**Table 2**

| No | Mw* | Mn** | PDI*** |
|---|---|---|---|
| (1) | 5,710 | 3,270 | 1,746 |
| (2) | 5,123 | 3,582 | 1,430 |
| (3) | 15,204 | 10,856 | 1,401 |
| (4) | 12,534 | 9,254 | 1,354 |
| (5) | 4,234 | 2,948 | 1,436 |
| (6) | 3,823 | 2,623 | 1,457 |
| (7) | 9,872 | 6,562 | 1,504 |
| (8) | 8,923 | 6,189 | 1,442 |
| (9) | 15,845 | 9,857 | 1,607 |
| (10) | 12,856 | 8,102 | 1,587 |
| (11) | 18,023 | 9,758 | 1,847 |
| (12) | 16,654 | 11,025 | 1,511 |
| (13) | 13,007 | 7,634 | 1,704 |
| (14) | 9,924 | 5,997 | 1,655 |
| (15) | 17,752 | 9,241 | 1,921 |
| (16) | 15,546 | 8,534 | 1,822 |
| (17) | 2,062 | 1,246 | 1,654 |
| (18) | 1,409 | 924 | 1,525 |
| (19) | 18,599 | 9,865 | 1,885 |
| (20) | 20,032 | 12,252 | 1,635 |
| (21) | 29,133 | 17,476 | 1,667 |
| (22) | 30,409 | 19,720 | 1,542 |
| *: Mw: Mean Molecular weight (weight),**Mn: Mean Molecular weight (number),***PDI: Poly Dispersity Index | | | |

### Experimental Example 2: ¹³C-NMR analysis of low molecular hyaluronic acid

The chemical structure of various sodium salt of oligo-hyaluronic acids (1)-(22) prepared in Example 1 was analyzed by ¹³C-NMR spectrometer (Varian Mercury plus 400) using D₂O (Deuterium oxide 99.9 atom %D, Aldrich Co. Ltd) as a solvent.

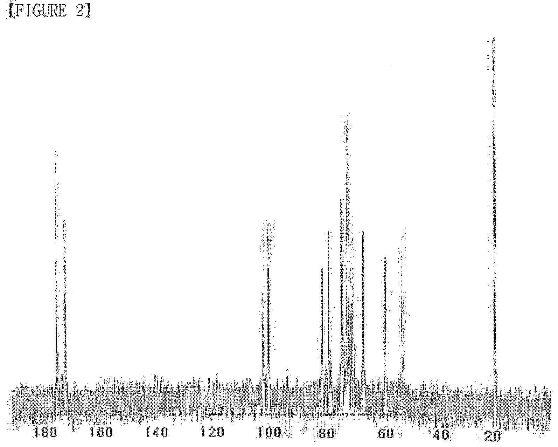

At the result, there did not show any by-product which shows double-bonded chain or cleaved sugar ring and showed clear spectrum of oligo-hyaluronic acid (*See* Fig. 2).

### Industrial Applicability

The method for preparing low molecular weight hyaluronic acid of the present invention could solve the problems occurring in the prior methods using chemical hydrolysis with acid and enzymatic hydrolysis with enzyme which has lots of disadvantages such as the formation of by-product, high cost, difficulty in mass production etc and has various advantages over prior arts such as easy to mass production, more economic production, uniform production of purposed low molecular weight hyaluronic acid, prevention of the ring cleavage of monosacchride in hyaluronic acid occurring in chemical hydrolysis and undesired formation of by-product having double bonded sugar ring occurring in enzymatic hydrolysis. Therefore, the inventive method of the present invention could provide effective and economic method for preparing low-molecular weight hyaluronic acid with mass production and low cost and the low molecular weight hyaluronic acid and the salt thereof prepared from the method of the present invention may extensively be used as a medicine, cosmetic, medical material, food additives.

## Claims

1. A method for preparing a low molecular weight hyaluronic acid and the salt thereof from high molecular weight hyaluronic acid comprising the procedure consisting of: adding 50 fold to 150 fold weight of distilled water or mixture solution with organic solvent to high molecular weight hyaluronic acid to dissolve at 1^{st} step; adding 0.01 to 50% ion exchange resin by weight to said solution and reacting with stirring at the temperature ranging from 20 to 100°C, for the period ranging from 24 to 120 hours to hydrolyze the high molecular weight hyaluronic acid at 2^{nd} step; removing said ion exchange resin with filtration after stopping the reaction, and neutralizing remaining solution with neutralizing agent to afford lyophilized low molecular weight hyaluronic acid of the present invention at 3^{rd} step.

2. The method according to claim 1 said hyaluronic acid is the compounds represented by following general chemical formula (I) and the salt thereof: 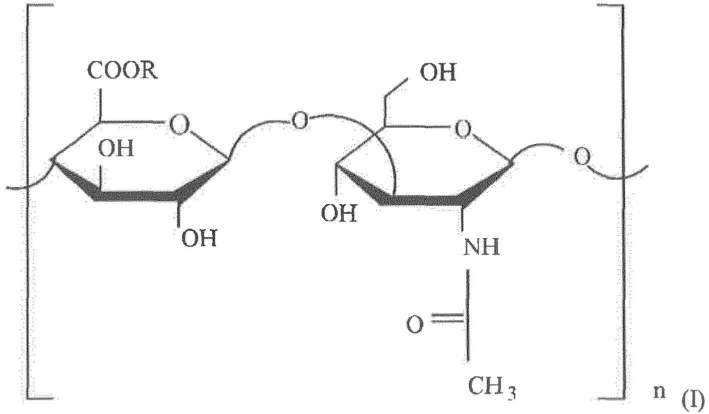
wherein n is an integer of 1 to 120,
R is a hydrogen atom or pharmaceutically acceptable salt.

3. The method according to claim 2 said n is an integer of 1 to 25.

4. The method according to claim 1 the molecular weight of said low molecular weight hyaluronic acid ranges from 500 to 50,000 dalton.

5. The method according to claim 1 said salt is selected from metal salt or base salt.

6. The method according to claim 5 said metal salt is alkali metal salt selected from lithium, sodium, potassium salt thereof or alkali-earth metal salt selected from magnesium, calcium salt thereof.

7. The method according to claim 5 said base salt is organic amino group selected from the group consisting of: ammonia, ethylene diamine, cyclohexyl amine, aniline ethanolamine, diethanolamine, triethanolamine, ethylamine, propyl amine, aryl amine, diethylamine, butylamine, isobutylamine, triethylamine, petylamine, t-butylamine, isopropylamine salt thereof.

8. The method according to claim 1 said ion exchange resin is cationic ion exchange resin, anionic exchange resin or the combination thereof.

9. The method according to claim 8 said cationic ion exchange resin is selected from strong acid cationic exchange resin such as gel type or porous type-styrene cationic exchange resin with sulfonyl group as an exchanging group, strong acid cationic exchange resin with sulfonyl group and phenol group as exchanging groups, weak acid cationic exchange resin such as high porous type acrylic exchange resin with carboxylic group as an exchanging group or weak acid cationic exchange resin with amino acetic acid group as an exchanging group anionic exchange.

10. The method according to claim 8 said anionic ion exchange resin is selected from gel type and porous type strong base styrene anionic exchange resin with triethylammonium group and diethyl ethanol ammonium group as an exchanging group respectively, strong base styrene anionic exchange resin with benzyldimethyl 2-hydroxyethyl ammonium group as an exchanging group, weak base acrylic anionic exchange resin with trimethylammonium group as an exchanging group, weak base styrene anionic exchange resin with tertiary ammine group as an exchanging group, weak base styrene anionic exchange resin with trimethylammonium group as an exchanging group or weak base styrene anionic exchange resin with benzyltrialkyl ammonium group as an exchanging group strong acid cationic exchange resin such as gel type or porous type-styrene cationic exchange resin with sulfonyl group as an exchanging group.

11. The method according to claim 1 the amount of said anionic ion exchange resin is 1 to 20% weight based on the weight of said high molecular weight hyaluronic acid salt.

12. The method according to claim 1 the temperature of said reaction ranges from 50 to 100°C, for the period ranging from 24 to 120 hours.

13. The method according to claim 1 said organic solvent is a lower alcohol selected from methanol, ethanol, butanol, glycerol, 1,3-butandiol, 1,2-propanediol, isopropanol, isobutanol or ethyleneglycol.

14. The method according to claim 1 the mixed ratio of said organic solvent is ranging from 1 to 50%.

15. The method according to claim 1 the mixed ratio of said organic solvent is ranging from 1 to 5%.

## Patentansprüche

1. Ein Verfahren zur Herstellung einer Hyaluronsäure mit niedrigem Molekulargewicht und die Salze davon aus Hyaluronsäure mit hohem Molekulargewicht, umfassend die Arbeitsschritte bestehend aus:
Zugeben von 50-fachem bis 150-fachem Gewicht an destilliertem Wasser oder eines Lösungsgemischs mit einem organischen Lösungsmittel zu Hyaluronsäure mit hohem Molekulargewicht, um diese in einem ersten Schritt zu lösen;
Zugeben von 0,01 bis 50 Gewichts-% an Ionenaustauschharz zu der Lösung und Umsetzen unter Rühren bei einer Temperatur im Bereich von 20 bis 100°C über einen Zeitraum der sich von 24 bis 120 Stunden erstreckt, um die Hyaluronsäure mit hohem Molekulargewicht in einem zweiten Schritt zu hydrolysieren;
Entfernen des lonenaustauschharzes durch Filtration nach Beenden der Reaktion und Neutralisieren der zurückbleibenden Lösung mit einem Neutralisierungsmittel, um eine lyophilisierte Hyaluronsäure mit niedrigem Molekulargewicht der vorliegenden Erfindung im dritten Schritt zu erhalten.

2. Das Verfahren gemäß Anspruch 1, wobei die Hyaluronsäure die Verbindungen ist, welche durch die folgende allgemeine Formel (I) dargestellt werden, und die Salze davon: 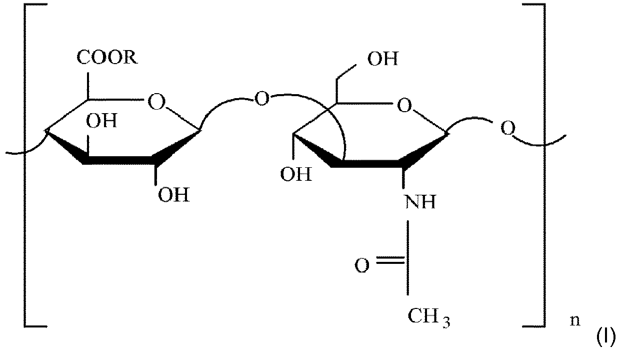
wobei n eine ganze Zahl von 1 bis 120 ist,
R ein Wasserstoffatom oder ein pharmazeutisch verträgliches Salz ist.

3. Das Verfahren gemäß Anspruch 2, wobei n eine ganze Zahl von 1 bis 25 ist.

4. Das Verfahren gemäß Anspruch 1, wobei das Molekulargewicht der Hyaluronsäure mit niedrigem Molekulargewicht im Bereich von 500 bis 50.000 Dalton liegt.

5. Das Verfahren gemäß Anspruch 1, wobei das Salz ausgewählt ist aus Metallsalz oder Basensalz.

6. Das Verfahren gemäß Anspruch 5, wobei das Metallsalz ein Alkalimetallsalz ist, das ausgewählt ist aus einem Lithium-, Natrium-, oder Kaliumsalz davon oder einem Erdalkalimetallsalz, das ausgewählt ist aus einem Magnesium-, oder Kalziumsalz davon.

7. Das Verfahren gemäß Anspruch 5, wobei das Basensalz ein organischer Aminorest ist, ausgewählt aus der Gruppe bestehend aus: Ammonium-, Ethylendiamin-, Cyclohexylamin-, Anilin- Ethanolamin-, Diethanolamin-, Triethanolamin-, Ethylamin-, Propylamin-, Arylamin-, Diethylamin-, Butylamin-, Isobutylamin-, Triethylamin-, Petylamin-, t-Butylamin-, Isopropylaminsalz davon.

8. Das Verfahren gemäß Anspruch 1, wobei das Ionenaustauschharz ein kationisches Ionenaustauschharz, ein anionisches Ionenaustauschharz oder die Kombination davon ist.

9. Das Verfahren gemäß Anspruch 8, wobei das kationische Ionenaustauschharz ausgewählt ist aus kationischen, stark sauren Ionenaustauschharzen, wie kationischen, gelartigen Styrolaustauschharzen oder Styrolaustauschharzen vom porösen Typ mit Sulfonylresten als Austauschgruppe, stark sauren, kationischen Austauschharzen mit Sulfonylresten und Phenolresten als Austauschgruppen, kationischen, schwach sauren Austauschharzen, wie Acrylaustauschharzen vom hochporösen Typ mit Carbonsäureresten als Austauschgruppe oder kationischen, schwach sauren Austauschharzen mit Aminoessigsäureresten als Austauschgruppe für anionischen Austausch.

10. Das Verfahren gemäß Anspruch 8, wobei das anionische Austauschharz ausgewählt ist aus anionischen, stark basischen, gelartigen Styrolaustauschharzen oder Styrolaustauschharzen vom porösen Typ mit Triethylammoniumresten bzw. Diethylethanolammoniumresten als Austauschgruppe, anionischen, stark basischen Styrolaustauschharzen mit Benzyldimethyl-2-hydroxyethylammoniumresten als Austauschgruppe, anionischen, schwach basischen Acrylsäureaustauschharzen mit Trimethylammoniumresten als Austauschgruppe, anionischen, schwach basischen Styrolaustauschharzen mit tertiären Aminresten als Austauschgruppe, anionischen, schwach basischen Styrolaustauschharzen mit Trimethylammoniumresten als Austauschgruppe oder anionischen, schwach basischen Styrolaustauschharzen mit Benzoltrialkylammoniumresten als Austauschgruppe kationischer stark saurer Austauschharze wie kationischen, gelartigen Styrolaustauschharzen oder Styrolaustauschharzen vom porösen Typ mit Sulfonylresten als Austauschgruppe.

11. Das Verfahren gemäß Anspruch 1, wobei die Menge des anionischen Ionenaustauschharzes 1 bis 20 Gewichts-%, basierend auf dem Gewicht des Hyaluronsäuresalzes mit hohem Molekulargewicht beträgt.

12. Das Verfahren gemäß Anspruch 1, wobei die Temperatur der Umsetzung im Bereich von 50 bis 100°C für einen Zeitraum im Bereich von 24 bis 120 Stunden liegt.

13. Das Verfahren gemäß Anspruch 1, wobei das organische Lösungsmittel ein niederer Alkohol ist, ausgewählt aus Methanol, Ethanol, Butanol, Glycerin, 1,3-Butandiol, 1,2-Propandiol, Isopropanol, Isobutanol oder Ethylenglykol.

14. Das Verfahren gemäß Anspruch 1, wobei das Mischverhältnis des organischen Lösungsmittels im Bereich von 1 bis 50 % liegt.

15. Das Verfahren gemäß Anspruch 1, wobei das Mischverhältnis des organischen Lösungsmittels im Bereich von 1 bis 5 % liegt.

## Revendications

1. Procédé pour préparer un acide hyaluronique de faible masse moléculaire et son sel à partir d'acide hyaluronique de masse moléculaire élevée, comprenant le mode opératoire consistant à : ajouter 50 fois à 150 fois en poids d'eau distillée ou d'une solution en mélange avec un solvant organique à de l'acide hyaluronique de masse moléculaire élevée à des fins de dissolution dans une 1ère étape ; ajouter 0,01 à 50 % en poids de résine échangeuse d'ions à ladite solution, et faire réagir sous agitation à une température située dans la plage allant de 20 à 100°C pendant une période allant de 24 à 120 heures pour hydrolyser l'acide hyaluronique de masse moléculaire élevée dans une 2ème étape ; éliminer ladite résine échangeuse d'ions par filtration après arrêt de la réaction, et neutraliser la solution restante avec un agent neutralisant pour donner l'acide hyaluronique de faible masse moléculaire lyophilisé de la présente invention dans une 3ème étape.

2. Procédé selon la revendication 1, dans lequel ledit acide hyaluronique est un composé représenté par la formule chimique générale (I) suivante ou un sel de celui-ci 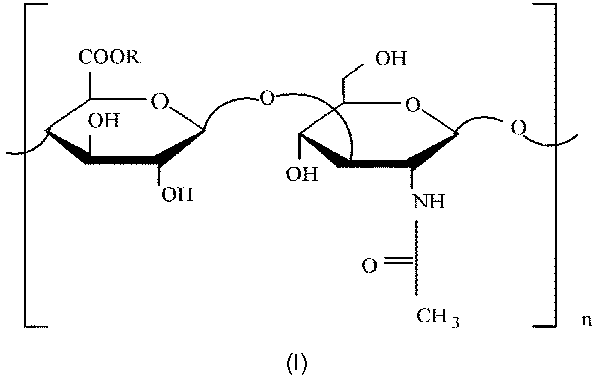
dans laquelle n est un entier de 1 à 120 et R est un atome d'hydrogène,
ou un sel pharmaceutiquement acceptable.

3. Procédé selon la revendication 2, dans lequel ledit n est un entier de 1 à 25.

4. Procédé selon la revendication 1, dans lequel la masse moléculaire dudit acide hyaluronique de faible masse moléculaire est située dans la plage allant de 500 à 50 000 daltons.

5. Procédé selon la revendication 1, dans lequel ledit sel est choisi parmi les sels métalliques et les sels avec une base.

6. Procédé selon la revendication 5, dans lequel ledit sel est un sel de métal alcalin choisi parmi les sels de lithium, de sodium, de potassium, ou un sel de métal alcalino-terreux choisi parmi les sels de magnésium et de calcium.

7. Procédé selon la revendication 5, dans lequel ledit sel avec une base est un groupe amino organique choisi dans le groupe constitué par les sels d'ammoniac, d'éthylènediamine, de cyclohexylamine, d'aniline, d'éthanolamine, de diéthanolamine, de triéthanolamine, d'éthylamine, de propylamine, d'arylamine, de diéthylamine, de butylamine, d'isobutylamine, de triéthylamine, de pétylamine, de t-butylamine, d'isopropylamine.

8. Procédé selon la revendication 1, dans lequel ladite résine échangeuse d'ions est une résine échangeuse de cations, une résine échangeuse d'anions ou une combinaison de celles-ci.

9. Procédé selon la revendication 8, dans lequel ladite résine échangeuse de cations est choisie parmi une résine échangeuse de cations à acide fort telle qu'une résine échangeuse de cations styrénique de type gel ou de type poreux avec un groupe sulfonyle en tant que groupe échangeur, une résine échangeuse de cations à acide fort avec un groupe sulfonyle et un groupe phénol en tant que groupes échangeurs, une résine échangeuse de cations à acide faible telle qu'une résine échangeuse d'ions acrylique de type fortement poreux avec un groupe acide carboxylique en tant que groupe échangeur, ou une résine échangeuse de cations à acide faible avec un groupe acide aminoacétique en tant que groupe échangeur.

10. Procédé selon la revendication 8, dans lequel ladite résine échangeuse d'anions est choisie parmi une résine échangeuse d'anions styrénique à base forte de type gel ou de type poreux avec un groupe triéthylammonium et un groupe diéthyléthanol-ammonium en tant que groupe échangeur respectivement, une résine échangeuse d'anions styrénique à base forte avec un groupe benzyldiméthyl-2-hydroxyéthyl-ammonium en tant que groupe échangeur, une résine échangeuse d'anions acrylique à base faible avec un groupe triméthylammonium en tant que groupe échangeur, une résine échangeuse d'anions styrénique à base faible avec un groupe amine tertiaire en tant que groupe échangeur, une résine échangeuse d'anions styrénique à base faible avec un groupe triméthylammonium en tant que groupe échangeur ou une résine échangeuse d'anions styrénique à base faible avec un groupe benzyltrialkylammonium en tant que groupe échangeur, une résine échangeuse de cations à acide fort tel qu'une résine échangeuse de cations styrénique de type gel ou de type poreux avec un groupe sulfonyle en tant que groupe échangeur.

11. Procédé selon la revendication 1, dans lequel la quantité de ladite résine échangeuse d'anions est de 1 à 20 % en poids par rapport au poids dudit sel d'acide hyaluronique de masse moléculaire élevée.

12. Procédé selon la revendication 1, dans lequel la température de ladite réaction est située dans la plage allant de 50 à 100°C pour une période allant de 24 à 120 heures.

13. Procédé selon la revendication 1, dans lequel ledit solvant organique est un alcool inférieur choisi parmi le méthanol, l'éthanol, le butanol, le glycérol, le 1,3-butanediol, le 1,2-propanediol, l'isopropanol, l'isobutanol et l'éthylèneglycol.

14. Procédé selon la revendication 1, dans lequel le rapport de mélange dudit solvant organique est situé dans la plage allant de 1 à 50 %.

15. Procédé selon la revendication 1, dans lequel le rapport de mélange dudit solvant organique est situé dans la plage allant de 1 à 5 %.
